Europäisches Patentamt

European Patent Office

Office européen des brevets

(19)

(11) Veröffentlichungsnummer: **0 192 228**

**A2**

(12) # EUROPÄISCHE PATENTANMELDUNG

(21) Anmeldenummer: 86102045.1

(22) Anmeldetag: 18.02.86

(51) Int. Cl.⁴: **G 05 D 23/19**
**F 24 D 19/10**

(30) Priorität: 18.02.85 DE 3505600
18.02.85 DE 3505601
18.02.85 DE 3505602
18.02.85 DE 3505603

(43) Veröffentlichungstag der Anmeldung:
27.08.86 Patentblatt 86/35

(84) Benannte Vertragsstaaten:
AT BE CH DE FR GB IT LI NL SE

(71) Anmelder: HAPPEL GmbH & Co.
Südstrasse
D-4690 Herne 2(DE)

(72) Erfinder: Kantner, Alexander, Dipl.-Phys. Dr. rer. nat.
Paul-Windgassen-Strasse 99
D-5630 Remscheid 11(DE)

(74) Vertreter: Patentanwaltsbüro Cohausz & Florack
Postfach 14 01 47
D-4000 Düsseldorf 1(DE)

(54) **Verfahren zum Regeln der Temperatur in Räumen durch Heiz- und/oder Kühleinrichtungen.**

(57) Die Erfindung betrifft ein Verfahren zur Regelung der Temperatur in Räumen, die Heiz- und/oder Kühleinrichtungen mit Stelleinrichtungen aufweisen, mittels derer ihre Leistung und damit die Raumtemperatur geregelt werden kann. Hierbei werden die Heiz- und/oder Kühleinrichtungen von einer zentralen Wärme- oder Kältequelle gespeist. Mindestens eine Temperatur wird am Ort der Wärme- bzw. Kältequelle erfaßt und hieraus die erste und/oder höhere Ableitungen nach der Zeit gebildet. Für die Werte der zeitlichen Ableitungen wird ein Sollwert-Band mit unterer und oberer Grenze derselben angelegt, und alle zeitlichen Ableitungen außerhalb des Sollwert-Bandes werden durch Veränderung der Leistung der Wärme- bzw. Kältequelle eliminiert.

FIG. 1

# COHAUSZ & FLORACK   0192228

## PATENTANWALTSBÜRO
### SCHUMANNSTR. 97 D-4000 DÜSSELDORF 1
Telefon: (0211) 68 33 46          Telex: 0858 6513 cop d

PATENTANWÄLTE:
Dipl.-Ing. W. COHAUSZ · Dipl.-Ing. R. KNAUF · Dipl.-Ing. H. B. COHAUSZ · Dipl.-Ing. D. H. WERNER

17.02.1986
HC/Be 46057EP

HAPPEL GmbH & Co.
Südstraße

4690 Herne 2


Verfahren zum Regeln der Temperatur in Räumen durch Heiz- und/oder Kühleinrichtungen.


Die Erfindung betrifft ein Verfahren zum Regeln der Temperatur in Räumen, die Heiz- und/oder Kühleinrichtungen mit Stelleinrichtungen aufweisen, mittels derer ihre Leistung und damit die Raumtemperatur geregelt werden kann, wobei die Heiz- und/oder Kühleinrichtungen von einer zentralen Wärme- oder Kältequelle gespeist werden. Für das Regelverfahren ist es unerheblich, ob die Heiz- und/oder Kühleinrichtungen mit Stelleinrichtungen in Form von automatisch wirkenden Drosselorganen, z.B. Thermostatventilen oder durch Bypass-, Drei- oder Mehrwege-Mischeinrichtungen oder durch Ventilatoren geregelt werden. Es wird lediglich vorausgesetzt, daß die in die jeweilige Heiz- und/oder Kühleinrichtung eingespeiste Leistung durch die Stelleinrichtung verändert werden kann. Ob dies durch Drosselung des Massenstroms bzw. durch Veränderung dessen über Bypass-Mischeinrichtungen erfolgt, oder ob dies durch Veränderung von Drehzahlen bei Gebläsekonvektoren geschieht, ist für das Verfahren unerheblich.

Es ist bekannt, die Raumtemperatur bei Ein-, Zwei- oder Mehrfamilienhäusern dadurch zu regeln, daß der Heizungswarmwasserkreislauf nach einer Außentemperatur gesteuert (Heizkurven) und die jeweilige Raumtemperatur durch Thermostatventile lokal geregelt wird. Diese sogenannte witterungsgeführte Heizkreisregelung regelt in Wirklichkeit nicht die Raumtemperatur, sondern steuert lediglich die Temperatur des Wärmeträgermediums. Die eigentliche Regelung in den Räumen wird durch automatisch arbeitende Thermostatventile vorgenommen. Diese arbeiten so, daß für den Fall einer zu hohen Vorlauftemperatur das Ventil in Abhängigkeit der Raumtemperatur den Massendurchfluß drosselt und im Falle einer zu geringen Temperatur das Ventil ganz öffnet, und damit den Durchfluß des Wärmeträgermediums durch den jeweiligen Heizkörper erhöht, und damit auch die Energieabnahme am jeweiligen Heizkörper. Der Nachteil dieser Regelung beruht darin, daß durch die Thermostatventile und deren Regelspiel keinerlei Rückwirkung auf die Veränderung der am Wärmeerzeuger eingestellten Kesselleistung erfolgt. Alle Einflüsse wie Sonnenstrahlung, Wind, jeweiliges Benutzerverhalten, Abschalten einzelner Räume usw., die die jeweilige Heizkurve zu niedrigeren oder höheren Mitteltemperaturen des Wärmeträgermediums am Wärmeerzeuger führen könnten, bleiben unberücksichtigt.

Durch die witterungsgeführte Außentemperatursteuerung wird somit willkürlich eine bestimmte Energiemenge dem Haus nach wechselnden Temperaturverhältnissen angeboten. Die Regelung der Raumtemperatur erfolgt durch Thermostatventile. Ob die Bereitstellung der Energie über die eingestellte Heizkurve ausreichend oder zu hoch oder zu gering ist, vermag diese Regelung nicht zu ermitteln, sondern es wird unabhängig davon, in welcher Art die Thermostatventile sich befinden, immer dieselbe Energieeinspeisung nach der jeweiligen Heizkurve vorgenommen. Durch dieses bekannte Verfahren können lokale Einflüsse das Verhalten des jeweiligen Wärme- oder Kälteerzeugers nicht beeinflussen.

Von einer echten Regelung eines Ein- oder Mehrfamilienhauses könnte man dann sprechen, wenn es gelänge, die Rückmeldung der Thermostatventile an den Wärmeerzeuger auswerten zu können und in Abhängigkeit davon die Vor- und/oder Rücklauftemperatur oder die in das Heiznetz eingespeiste Leistung in Abhängigkeit davon zu bestimmen. Hierzu wurde bereits in der deutschen Patentanmeldung P 32 02 168 vorgeschlagen, die Vorlauftemperatur des Heizkreises nicht in Abhängigkeit der Außentemperatur oder der Raumtemperatur, sondern in Abhängigkeit der örtlichen Regler, d.h. bei einem Wohnhaus in Abhängigkeit der Thermostatventile, zu bestimmen. Hierzu wurde vorgeschlagen, den Heizwassermassenstrom im Heizkreis zu messen. Und in Abhängigkeit des Wertes desselben die Vorlauftemperatur des Heizkreises zu verändern. Und dies in der Weise, daß höheren Heizwassermassenströmen entsprechend geringere Vorlauftemperaturen und damit geringere Leistung und geringeren Wassermassenstrommengen höhere Vorlauftemperaturen und damit höhere Vorlaufleistung zugeordnet werden. Die Überlegung dahinter ist, daß ein Drosseln der Thermostatventile auch zur Drosselung des Gesamtwassermassenstromes im Heizkreis führt und somit die Energiezufuhr vermindert werden kann und umgekehrt ein Ansteigen desselben eine höhere Energiezufuhr erfordert.

Nachteilig an dieser Art der Regelung ist, daß sie für alle Heizsysteme, die keine nennenswerte Drosselung des Gesamtwassermassenstromes im Heizkreis mit sich bringen, nicht verwendet werden kann. Dies ist z.B. der Fall bei sogenannten Einrohrheizungen. Nachteilig ist ferner, daß sie im Prinzip nur mit Wärmequellen gefahren werden kann, die kontinuierlich regelbar sind, dagegen für Systeme mit diskontinuierlicher Brennersteuerung, die nach dem Ein-Aus-System gefahren werden, nicht verwendbar ist. Dies liegt daran, daß hier nur ein Sollwert als Gesamtmassenstrom vorgegeben wird, jedoch für ein vernünftiges Regelverhalten mindestens ein oberer und ein unterer Grenzmassenstromwert als Schaltpunkt für diskontinuierlich betriebene Wärmequellen benötigt werden. Ferner bringt diese Regelung mit sich, daß einem Über- und Unterschwingen des Gesamtmassenstroms unter den Sollwert erst so spät gegengesteuert werden kann, daß es zu Unwohlsein in den einzelnen zu beheizenden Räumen führt. Eine solche Regelung läßt sich auch mit bekannten Hysteresen nicht eliminieren. Auch durch das Vorhandensein von Hysteresen können die unerwünschten Temperaturschwankungen in den Räumen, die zu beheizen sind, nicht vermieden werden. Diese großen Schwankungen führen überdies zu großen Energieverlusten. Diese Regelvorrichtung führt also nicht zu befriedigenden Ergebnissen, da sie mit zu großer Trägheit auf die Änderung des Gesamtmassenstromes reagiert. Ferner kann mit einem einzigen Sollwert die den jeweiligen Wünschen des Benutzers entsprechende Komfort- oder Spar- oder gar Frostschutzstufe nicht erreicht werden.

Aufgabe der Erfindung ist es, ein Verfahren zu schaffen, durch das eine Heiz- und/oder Kühleinrichtung sehr exakt und feinfühlig bei geringem Geräteaufwand regelbar ist.

Ferner ist es Aufgabe der Erfindung, den Regelbereich an jedem Schaltpunkt beliebig einstellbar zu haben, so daß die Heizungs- oder Kühlungsanlage vom Benutzer beliebig gefahren werden kann.

Diese Aufgaben werden erfindungsgemäß dadurch gelöst, daß mindestens eine Temperatur am Ort der Wärme- bzw. Kältequelle erfaßt wird, hieraus die erste und/oder eine höhere Ableitung nach der Zeit gebildet werden, für die Werte der zeitlichen Ableitungen ein Sollwert-Band mit unterer und oberer Grenze derselben angelegt wird, und daß alle zeitlichen Ableitungen außerhalb des Sollwert-Bandes durch Veränderung der Leistung der Wärme- bzw. Kältequelle eliminiert werden.

Es wird also die gemessene Temperatur nicht unverändert in das Sollwert-Band gelegt, sondern es wird die erste Ableitung der gemessenen Kurve gebildet, d.h. die zeitliche Ableitung der gemessenen Temperatur. Damit verläuft nicht die Temperaturkurve selber innerhalb des Bandes, sondern der Wert der Steigung der Temperatur. Hierdurch wird eine genauere und frühzeitige Regelung erreicht.

In einer Alternative wird vorgeschlagen, daß nicht die erste zeitliche Ableitung der Temperaturkurve in den Bandbereich gelegt wird, sondern die zeitliche Ableitung der zeitlichen Ableitung der Temperaturkurve.

Beide Lösungen führen u.a. zu dem Vorteil, daß nur ein Temperaturfühler erforderlich ist und eine sehr exakte und leicht veränderliche als auch energiesparende Regelung erreicht wird.

Solche Regelungen können für alle Arten von Heizvorrichtungen und Kühlvorrichtungen verwendet werden. Ferner ist es unerheblich, wie die Regelanlage auf die Kühl- oder Heizvorrichtung einwirkt, d.h. ob sie nur den Brenner oder die Kühlvorrichtung abwechsend ein- oder ausschaltet, ob sie die Kühlvorrichtung oder den Brenner kontinuierlich bzw. modulierend steuert entsprechend einem Sollwert, oder aber ob es sich um eine Mischerregelung handelt.

Die erfindungsgemäße Lehre läßt sich bei allen Heiz- oder Kühleinrichtungen einsetzen, die Stelleinrichtungen besitzen, mittels derer die Wärme- bzw. Kälteleistung der Einrichtung und damit die Raumtemperatur regelbar ist, gleichgültig, ob es sich dabei um automatisch wirkende Thermostatventile oder um andere Stelleinrichtungen handelt, auf die Soll-Ist-Wert-Temperaturdifferenzen in Räumen einwirken können. Zum Beispiel übliche Heizkörper, Gebläseheizkörper, Industriehallenluftheizgeräte mit Ventilatoren, Klimaeinrichtungen mit Thermostatventilen, Heiz- oder Kühleinrichtungen mit Bypassventilen und Kombinationen daraus. Hierbei ist es ohne Bedeutung, wie die Heiz- und/oder Kühleinrichtung verstellbar ist. Unerheblich ist ferner, wie die Heiz- oder Kühleinrichtungen untereinander verbunden sind, also ob als Ein- oder Zweirohr-System oder Kombinationen daraus. Das Verfahren läßt sich auch auf Systeme anwenden, wo parallel Kälte- und Wärmeleitungen verlegt sind, z.B. in sogenannten 4-Leiter-Systemen. Solchermaßen komfortable Systeme setzt man üblicherweise in Hotels, Kongreßhallen oder auch kommunalen oder öffentlichen Gebäuden ein.

Die zeitliche Ableitung der Temperatur des Vorlaufs, Rücklaufs etc. bzw. die zweite zeitliche Ableitung sind ein universelles Maß für Unter- bzw. Überversorgung von Heiz- oder Kühleinrichtungen. Gleichgültig, wie die Grenzen gesetzt werden, werden die Grenzen in der einen oder anderen Richtung überschritten, führt dies zwangsläufig zu einer Detektion mittels der zeitlichen Ableitung. Nur noch ein einziger Temperaturfühler und keine anderen Meßgeräte werden gebraucht. Es werden eine hohe Ausfallsicherheit und geringe Kosten erreicht, da der Temperaturfühler im Gerät untergebracht werden kann. Eine Installation außerhalb des Gerätes ist nicht notwendig.

Über die Erfassung der zeitlichen Ableitung(en) der Rauchgastemperatur mit und ohne Kombination von Vor- und Rücklauf kann überdies Umweltschutz mit Energieeinsparung realisiert werden, insbesondere werden kritische Ober- und Untergrenzen der Rauchgastemperatur für Kessel und Schornstein schon von der Führungsgröße der Regelung her

0192228

nicht mehr überschritten.

Ein Erfassen der Ableitung der Vorlauftemperatur bietet sich vorteilhafterweise bei der Zweirohrheizung und eine Erfassung der Rücklauftemperatur vorteilhaft bei der Einrohrheizung an, wobei dies nicht zwingend erforderlich ist.

Die Wärmequellen- bzw. Kesseltemperatur als Meßgröße kann der Vor- und Rücklauf- bzw. Rauchgastemperatur allein oder zusätzlich überlegen sein, weil hier noch eine Überwachung des Kesselblocks mit eingebaut werden kann und über Spezial-Know-How (Geometrie des Kessels, Wasserführung) eine spezielle besonders geeignete Fühlerposition für optimales Reglerverhalten ermittelbar ist.

Das gleiche gilt für die Erfassung einer geeigneten Kältequellentemperatur, auch hier kann diese als Führungsgröße der Vor- und/oder Rücklauftemperatur der Kältequelle überlegen sein.

Ein besonderer Vorteil für die Nachrüstung und für Brennwertkessel ist darin zu sehen, daß keinerlei schmutzmäßige bzw. installationsseitige Aufwendungen entstehen. Beim Brennwertkessel kann sich besonders die Kombination der Rauchgastemperatur mit ihren zeitlichen Ableitungen vorteilhaft auswirken.

Das Neue und die entscheidende Erkenntnis für die Erfindung ist, daß neben den reinen Zahlenwerten (zeitliche Ableitung(en)) in diesen implizit auch die Dynamik des Gesamtsystems enthalten ist. Man hat eigentlich zwei Meßgrößen, nämlich die Temperatur und die Zeit zur Verfügung, und damit alle Vergangenheitswerte, obwohl im Grunde nur ein Ensemble an Temperatur-Werten vorliegt.

Durch Kenntnis der Temperaturen nebst ihrem Zeitverhalten ist es möglich, den echten Energiebedarf für die Gebäude bereitzustellen bzw. allen wechselnden Bedingungen anzupassen, und zwar ohne jegliche Information einer externen Meßgröße.

Die einzelnen Werte der Ober- und Untergrenzen können im Prinzip völlig frei gewählt werden. Wählt man die Obergrenzen zu hoch, hat das in relativ weiten Grenzen lediglich zur Folge, daß die Zeit des erhöhten Betriebsmitteleinsatzes zwar länger wird, jedoch die Zeit des verringerten Betriebsmitteleinsatzes entsprechend auch. Wählt man die Untergrenzen zu hoch, hat das lediglich zur Folge, daß die Zeit des verringerten Betriebsmitteleinsatzes kürzer wird, die Zeit des erhöhten Betriebsmitteleinsatzes aber entsprechend auch. Man ist damit in weiten Grenzen durch die Regelung vor Falscheingriffen geschützt, d.h. die Parameter sind gegenüber Änderungen relativ stabil. Lediglich die gemeinsame Veränderung von Untergrenzen und Obergrenzen nach unten oder nach oben verändert die Situation in Richtung Sparen oder Überversorgung (Komfort) drastisch. Das Anheben einer einzelnen Größe nach oben bringt zunächst keine besonders nachteiligen Energieverschwendungen mit sich, hierzu müssen beide Grenzen angehoben werden.

Die Regelung ist absolut stabil und weitgehend selbstadaptiv. Im Prinzip handelt es sich im kontinuierlichen Betrieb um einen PD-Regler, im diskontinuierlichen Betrieb um einen Zweipunktregler, der mit den einfachsten Mitteln zu implementieren ist.

Für die erfindungsgemäße Alternative, bei der die erste zeitliche Ableitung der gemessenen Temperatur verwendet wird, wird vorteilhafterweise vorgeschlagen, daß für Heizbetrieb die obere Grenze des Sollwert-Bandes der Betrag einer positiven Zahl oder Null ist und die untere Grenze des Sollwert-Bandes der Betrag einer negativen Zahl ist, und daß für Kühlbetrieb die obere Grenze des Sollwert-Bandes der Betrag einer negativen Zahl oder Null ist und die untere Grenze des Sollwert-Bandes eine positive Zahl ist.

Eine noch universellere Variante betrachtet nunmehr die Beträge der zeitlichen Änderungen, gleichgültig, ob der Wert der zeitlichen Änderungen der Temperatur positiv oder negativ ist. Für die obere Grenze des Sollwert-Bandes ist der Betrag eine positive Zahl, für die untere Grenze des Sollwert-Bandes ist der Betrag eine kleinere positive Zahl als der der oberen Grenze. Daraus ergibt sich der besonders günstige Vorteil, daß die gesamte Regelung sich reduzieren läßt auf das Abfragen zweier vorzeichenloser Beträge; Beträge zwischen dem größeren und dem kleineren führen zu keinem Eingriff, Werte über dem oberen Betrag zu einer Reduktion der Wärme- bzw. Kältequellenleistung und kleinere Werte als der untere Betrag zu einer Erhöhung derselben.

Bei Verwendung der zweiten zeitlichen Ableitung der gemessenen Temperatur wird vorteilhafterweise vorgeschlagen, daß für Heizbetrieb die obere Grenze des Sollwert-Bandes eine positive Zahl oder Null ist und die untere Grenze des Sollwert-Bandes eine positive Zahl ist, und daß für Kühlbetrieb die obere Grenze des Sollwert- Bandes der Betrag einer negativen Zahl oder Null ist und die untere Grenze des Sollwert-Bandes der Betrag einer negativen Zahl ist.

Vorzugsweise wird vorgeschlagen, daß eine Abweichung der Werte über die obere Grenze des vorgegebenen Sollwert-Bandes hinaus durch Verringerung und eine Abweichung unter die untere Grenze durch Vergrößerung der in den Heiz- bzw. Kühleinrichtungsvorlauf eingespeisten Wärme- bzw. Kälteleistung eliminiert wird.

Hierbei kann bei Abweichung der Werte über die obere Grenze des vorgegebenen Sollwert-Bandes über eine vorgegebene Zeit hinaus durch Verringerung und bei Abweichung der Werte unter die untere Grenze des vorgegebenen Sollwert-Bandes über eine vorgegebene Zeit hinaus durch Vergrößerung der in den Heiz- bzw. Kühleinrichtungsvorlauf eingespeisten Wärme- bzw. Kälteleistung eliminiert werden.

Von Vorteil ist auch, wenn eine Abweichung der Werte über die obere Grenze des jeweilig vorgegebenen Sollwert-Bandes hinaus durch Verringerung der in den Heiz- bzw. Kühleinrichtungsvorlauf eingespeisten Wärme- bzw. Kälteleistung entsprechend dem Maß dieser Abweichung und eine Abweichung der Werte unter die untere Grenze des jeweilig vorgegebenen Sollwert-Bandes durch Vergrößerung der in den Heiz- bzw. Kühleinrichtungsvorlauf eingespeisten Wärme- bzw. Kälteleistung entsprechend dem Maß dieser Abweichung eliminiert wird.

Ferner kann die obere und/oder die untere Grenze des Sollwert-Bandes herstellerseitig je nach dem Wärme- bzw. Kälteerzeuger-Leistungskennfeld und/oder nutzerbezogen wählbar voreinstellbar sein. Besonders vorteilhaft ist es, wenn eine Reihe von oberen und unteren Grenzen des jeweiligen Sollwert-Bandes werksseitig zur wahlfreien Einstellung zur Verfügung stehen, die benutzerseitig feinstufig auswählbar sind, wobei abnehmenden Werten der oberen Grenzen gleichsinnig abnehmende Werte der unteren Grenzen zugeordnet sind.

Eine Komfort-Betriebsart ist dann erreichbar, wenn die und die untere Grenze sowie beide Grenzen des jeweiligen Sollwert-Bandes benutzerseitig in zulässigen Grenzen wählfrei veränderbar sind.

Für eine kontinuierliche Veränderung der Zufuhr der Betriebsenergie zum Wärme- bzw. Kälteerzeuger ist es besonders vorteilhaft, wenn das Ändern der eingespeisten Wärme- bzw. Kälteleistung durch kontinuierliche Veränderung der Zufuhr der Betriebsenergie zum Wärme- bzw. Kälteerzeuger erfolgt.

Auch eine diskontinuierliche Energiezufuhr läßt das erfindungsgemäße Verfahren zu. Es kann also das Ändern der eingespeisten Wärme- bzw. Kälteleistung durch Ein- und Ausschalten der Zufuhr der Betriebsenergie zum Wärme- bzw. Kälteerzeuger erfolgen. Hierbei wird vorteilhafterweise vorgeschlagen, daß bei Auftreten einer Abweichung der Werte über eine der beiden Grenzen ihres vorgegebenen Sollwert-Bandes hinaus das Zeitverhältnis der Ein-Schaltung zur Aus-Schaltung der Zufuhr von Betriebsenergie zum Wärme- bzw. Kälteerzeuger entsprechend dem Maß der Abweichung der Werte verändert wird.

In einer weiteren vorteilhaften Ausgestaltung wird vorgeschlagen, daß die Veränderung der dem im Heiz- bzw. Kühleinrichtungsvorlauf befindlichen Wärmeträgermedium zugeführten Wärme- bzw. Kälteleistung mittels einer Mehrwege-Mischeinrichtung erfolgt und bei Auftreten einer Abweichung der Werte über die obere und unter die untere Grenze ihres vorgegebenen Sollwert-Bandes die Zufuhr von Wärme- bzw. Kälteleistung zum im Heiz- bzw. Kühleinrichtungsvorlauf befindlichen Wärmeträgermedium durch Veränderung des Verhältnisses des vom Wärme- bzw. Kälteerzeuger her in den Heiz- bzw. Kühleinrichtungsvorlauf eingespeisten Massenstroms zum Gesamtmassenstrom und/oder der Stellung des dieses Verhältnis bestimmenden Organs der Mehrwege-Mischeinrichtung verändert wird.

Besonders vorteilhaft ist es, wenn nicht vorliegende Abweichungen vom Sollwert-Band gemeldet werden. Hierzu kann bei Fehlen einer Abweichung und/oder Fehlen einer Abweichung innerhalb einer vorgegebenen Zeitspanne der Werte über die obere und/oder unter die untere Grenze ihres jeweilig vorgegebenen Sollwert-Bandes diese Unregelmäßigkeit optisch und/oder akustisch wahrnehmbar gemacht werden.

Besonders vorteilhaft ist es, wenn Abweichungen gegenüber dem Sollwert-Band dazu führen, daß das Band selbsttätig verändert wird, so daß die Anlage dazulernt. Hierzu wird vorgeschlagen, daß über eine vorbestimmte Zeitspanne die Anzahl der im Betrieb auftretenden Abweichungen der zeitlichen Änderung der Werte über die obere und/oder unter die untere Grenze ihres Sollwert-Bandes und/oder die Anzahl der im Betrieb auftretenden Veränderungen in Form von Aufnahmen und/oder Beendigungen der Zufuhr von Wärme- bzw. Kälteleistung zum im Heiz- bzw. Kühleinrichtungsvorlauf befindlichen Wärmeträgermedium und/oder von Änderungen der Stellung des das Verhältnis des vom Wärme- bzw. Kälteerzeuger her in den Heiz- bzw. Kühleinrichtungsvorlauf eingespeisten Massenstroms zum Gesamtmassenstrom des Wärmeträgermediums bestimmenden Organs einer Mehrwege-Mischeinrichtung gemessen und entsprechend der Abweichung dieser Anzahl von einer vorgegebenen Zahl solcher Abweichungen das jeweilige Sollwert-Band verändert wird. Ferner kann hierbei die Messung einer gegenüber einer vorgegebenen Zahl von Abweichungen der Werte über die obere und/oder unter die untere Grenze ihres Sollwert-Bandes und/oder einer gegenüber einer vorgegebenen Zahl von Veränderungen der Zufuhr von Wärme- bzw. Kälteleistung zum im Heiz- bzw. Kühleinrichtungsvorlauf eingespeisten Massenstroms zum Gesamtmassenstrom des Wärmeträgermediums bestimmenden Organs einer Mehrwege-Mischeinrichtung größeren Anzahl solcher Abweichungen die obere und/oder die untere Grenze des Sollwert-Bandes in Richtung einer Vergrößerung der Differenz dieser beiden Grenzen verändert und bei Messung einer gegenüber einer vorgegebenen Zahl von Abweichungen über die obere und/oder unter die untere Grenze ihres Sollwert-Bandes und/oder einer gegenüber der vorgegebenen Zahl von Veränderungen der Zufuhr von Wärme- bzw. Kälteleistung zum im Heiz- bzw. Kühleinrichtungsvorlauf befindlichen Wärmeträgermedium und/oder von Änderungen der Stellung des das Verhältnis des vom Wärme- bzw. Kälteerzeuger her in den Heiz- bzw. Kühleinrichtungsvorlauf eingespeisten Massenstroms zum Gesamtmassenstrom des Wärmeträgermediums bestimmenden Organs einer Mehrwege-Mischeinrichtung geringeren Anzahl solcher Abweichungen die obere und/oder die untere Grenze des Sollwert-Bandes in Richtung einer Verringerung der Differenz dieser beiden Grenzen verändert werden.

Ausführungsbeispiele der erfindungsgemäßen Verfahren werden im folgenden näher beschrieben. Es zeigen:

Fig. 1    eine schematische Darstellung einer die Erfindung verkörpernden Heizungsanlage in Einstrang-Bauweise mit in zwei Funktionsgruppen gegliederter Regeleinrichtung;

Fig. 2    in der Darstellung gemäß Fig. 1 entsprechender Darstellung eine andere Ausführungsform der Erfindung in Form einer Heizungsanlage in Zweistrang-Bauweise mit einem Vier-Wege-Mischer als Mehrwege-Mischeinrichtung und einer nicht aufgegliederten Regeleinrichtung; und

Fig. 3    einen Ausschnitt aus der der Ausführungsform gemäß Fig. 2 entsprechenden Ausführung der Erfindung, bei der jedoch ein Drei-Wege-Mischer als Mehrwege-Mischeinrichtung eingesetzt ist.

Gleiche Bezugszeichen bezeichnen dabei jeweils gleiche Einzelheiten der Ausführungsbeispiele.

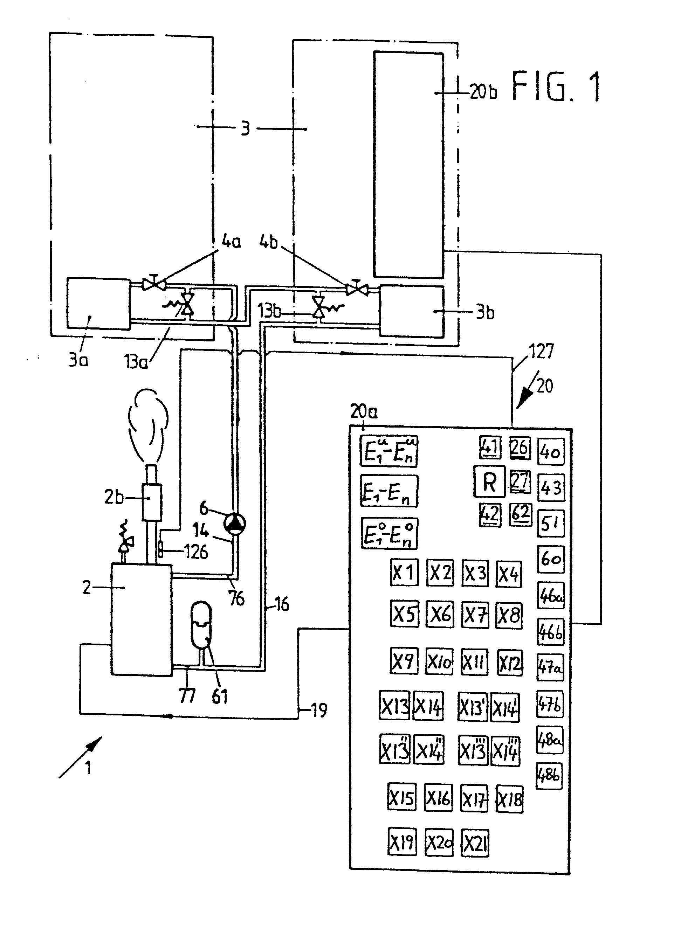

Die als Ganzes mit 1 bezeichnete Heizungsvorrichtung nach der Erfindung weist beim Ausführungsbeispiel gemäß Fig. 1 einen Wärmeerzeuger 2 auf, der als Wärmepumpe in Kompressions- oder Sorptionsbauweise mit einem sekundärseitig in das das Wärmeträgermedium führende Rohrleitungssystem eingeschalteten Wärmetauscher ausgebildet sein kann, wobei diesem Wärmetauscher die erforderliche Wärmeenergie mittelbar in Form eines in einem nicht näher dargestellten Kreislaufs zirkulierenden und ihn primärseitig beaufschlagenden Primärwärmeträgermediums von einer beispielsweise als verbrennungsmotorisch betriebenen Kompressionswärmepumpe oder als mit fossilem Brennstoff betriebene Sorptionswärmepumpe ausgebildeten Wärmepumpen zugeführt wird. In beiden Fällen handelt es sich um ein sogenanntes offenes Zuführungssystem, da stets ein Teil der zugeführten Betriebsenergie als Rauch- bzw. Abgas über den Auspuff oder den Schornstein verloren geht. Die Zuführung der Betriebsenergie zum Wärmeerzeuger 2 erfolgt hier mittelbar, weil dem Wärmetauscher desselben ein Kreislauf mit Primärwärmeträgermedium vorgeschaltet ist, dem seinerseits die Wärmeenergie im Falle der Ausbildung als Kompressionswärmepumpe über den bzw. die Verbrennungsmotor(en) des Kompressors bzw. der Kompressoren und im Falle der Ausführung als Sorptionswärmepumpe über deren Kocher zugeführt wird.

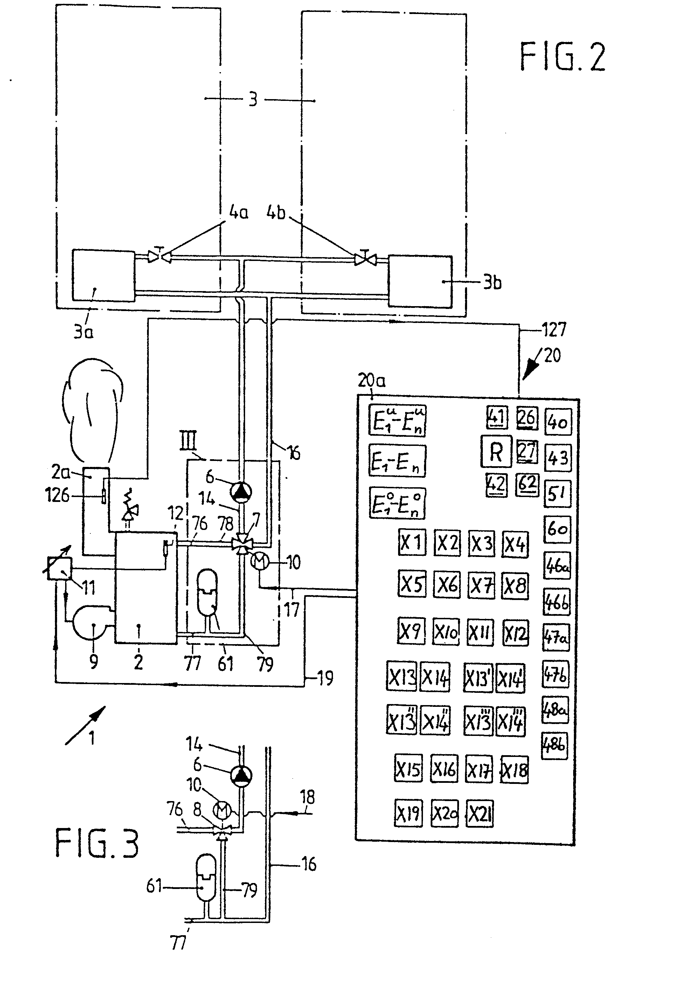

Statt der dargestellten Ausführung könnte auch ein brennstoffbefeuerter Heizkessel eingesetzt sein, wie letzterer in Fig. 2 rein beispielsweise dargestellt ist. Dann würde es sich hierbei um eine unmittelbare Zuführung der Betriebsenergie zum Wärmeerzeuger 2 bzw. dessen Wärmetauscher handeln, da dieser primärseitig von den heißen Rauchgasen direkt umspült wird. Die Darstellung des Wärmeerzeugers in Fig. 1 soll demgemäß nur beispielhaft eine von vielen möglichen Ausführungsformen eines Wärmeerzeugers symbolisieren.

Der Wärmeerzeuger 2 ist mit seinem Wärmeträgermediumsausgang 76 an die Vorlaufleitung 14 des das Wärmeträgermedium führenden Leitungssystems angeschlossen, das seinerseits - wie aus Fig. 1 ersichtlich - als Einstrang-System ausgebildet ist, indem nämlich der Heizungsvorlauf 14, in den eine Umwälzpumpe 6 beliebiger Ausführung bzw. Bauweise eingeschaltet ist, über eine automatische Drosseleinrichtung 4a zu einem Heizkörper 3a eines von mehreren, im dargestellten Ausführungsbeispiel zwei Räumen, führt, von dem dann eine Weiterführungsleitung zu einer weiteren automatischen Drosseleinrichtung 4b eines einem anderen Raum des als Ganzes mit 3 bezeichneten, mehrere Räume aufweisenden Wärmeverbrauchers zugeordneten weiteren Heizkörpers 3b führt. Dieser letzte Heizkörper der in Einstrang-Bauweise ausgeführten Heizungvorrichtung 1 ist über eine Heizungsrücklaufleitung 16 an den Wärmeträgermediumeingang 77 des Wärmeerzeugers 2 angeschlossen. Die Zuläufe und Abläufe zu bzw. von den einzelnen Heizkörpern 3a bzw. 3b sind jeweils durch eine Überströmleitung kurzgeschlossen, in welche jeweils ein druckeinstellbares Überströmventil 13a bzw. 13b eingeschaltet ist. Am Wärmeträgermediumrücklauf 16 ist im Bereich des Wärmeträgermediumeinganges 77 des Wärmeerzeugers 2 ein Ausdehnungsgefäß 61 für das Wärmeträgermedium angeschlossen.

Am Auspuff 2b der hier beispielsweise als mit einem verbrennungsmotorbetriebenen Kompressor arbeitende Wärmepumpe ist eine Meßeinrichtung 126 für die Temperatur des Rauch- bzw. Abgases angeordnet, die über eine Meßwertleitung 127 mit einer als Ganzes mit 20 bezeichneten Regeleinrichtung in Verbindung steht. Diese Regeleinrichtung wiederum steht über eine Steuerleitung 19 mit dem nicht im einzelnen dargestellten und auch nicht näher bezeichneten Stellglied des Wärmeerzeugers 2 in Verbindung, das je nach Ausbildung desselben das Brennstoffregulierungsventil eines Brenners bei flammenbefeuertem Kessel oder das Gas- bzw. Ölregulierungsventil für die Zuführung von Treibstoff zum Dieselmotor oder Vergaser eines verbrennungsmotorbetriebenen Kompressors einer Kompressionswärmepumpe oder aber eine Rauchgas-Bypass-Klappe eines als Rauchgaskühler eingesetzten Wärmetauschers oder dergleichen sein kann.

Die zugehörige Regeleinrichtung 20, die beim Ausführungsbeispiel gemäß Fig. 1 aus zwei Funktionsgruppen 20a und 20b besteht, wird im folgenden im Zusammenhang mit dem Ausführungsbeispiel gemäß Fig. 2 näher erläutert.

Der Aufbau der wiederum als Ganzes mit 1 bezeichneten Heizungsvorrichtung nach der Erfindung gemäß Fig. 2 ist wesentlichen der gleiche wie der gemäß Fig. 1. Auch hier ist der Wärmeerzeuger mit 2 bezeichnet, jedoch als brennerbetriebener Kessel dargestellt, dessen Brenner 9 als Einrichtung zur Beeinflussung der Betriebsenergie für den Wärmeerzeuger 2 über eine herkömmliche Regeleinrichtung mit einer Meßeinrichtung 12 für die Temperatur des Wärmeträgermediums im Wärmeerzeuger 2 (Kesselthermometer) und einer Einrichtung 11 zur Beeinflussung der Zufuhr von Betriebsenergie zum Wärmeerzeuger 2 derart gefahren werden kann, daß die Temperatur des Wärmeträgermediums, beispielsweise des Kesselwassers, im Wärmeerzeuger einen vorgegebenen Wert nicht übersteigt. Dargestellt ist ferner, daß der Wärmeträgermediumausgang 76 des Wärmeerzeugers 2 über eine Beimischleitung 78 an den einen Eingangsstutzen eines Vier-Wege-Mischers 7 und der Wärmeträgermediumeingang 77 des Wärmeerzeugers 2, an den im übrigen in der gleichen Weise, wie im Zusammenhang mit dem Ausführungsbeispiel gemäß Fig. 1 bereits erläutert, ein Ausdehnungsgefäß 61 für Wärmeträgermedium angeschlossen ist, an den einen Ausgangsstutzen des Vier-Wege-Mischers 7 über eine Rückführleitung 79 angeschlossen ist. Der andere Ausgangsstutzen des Vier-Wege-Mischers 7 ist über die Wärmeträgermediums-Vorlauf-Leitung 14 mit einer Leitungsverzweigung verbunden, die so viele Wärmeträgermediums-Abgänge aufweist, wie zu bedienende Heizkörper der Heizungsvorrichtung 1 vorhanden sind, es sei denn, es würden mehrere Leitungsverzweigungen hintereinandergeschaltet angeordnet werden, was in Einzelfällen zu bevorzugen sein kann, beispielsweise wenn die Zahl der Heizkörper besonders groß ist.

An die genannte Leitungsverzweigung, die vom 14 angespeist wird, sind im in Fig. 2 dargestellten Ausführungsbeispiel zwei Heizkörper 3a bzw. 3b jeweils über eine vorgeschaltete automatisch wirkende Drosseleinrichtung 4a bzw. 4b angeschlossen, wobei auch hier der hier allerdings nur aus zwei Heizkörpern 3a, 3b bestehende Wärmeverbraucher als Ganzes mit 3 bezeichnet ist. Die beiden Heizkörper 3a, 3b (und bei mehr vorhandenen Heizkörpern auch diese) sind mit ihren Wärmeträgermedium-Ausgängen jeweils mit einer weiteren, zwar dargestellten, jedoch nicht näher bezeichneten Leitungsverzweigung verbunden, von der das Wärmeträgermedium über die mit dieser in Verbindung stehende Rücklaufleitung 16 zum Vier-Wege-Mischer 7 zurückströmt, indem der Heizungsrücklauf 16 an den anderen Eingangsstutzen des Vier-Wege-Mischers 7 angeschlossen ist.

Es ist ersichtlich, daß auf diese Weise eine Heizungsanlage in Zweistrang-Bauweise gebildet ist, wobei diese außerdem auch noch eine Mehrwege-Mischeinrichtung in Form eines Vier-Wege-Mischers 7 aufweist. Diesem ist im Heizungsvorlauf 14 eine Umwälzpumpe 6 nachgeschaltet.

Auch beim Ausführungsbeispiel gemäß Fig. 2 ist eine Meßeinrichtung 126 für die Temperatur des Rauchgases vorgesehen, die - wie dargestellt - im Rauchgasabgang 2a (Rauchgas- bzw. Abgasstutzen) des hier mit fossilem Brennstoff befeuerten Heizkessels angeordnet sein kann und über eine Meßwertleitung 127 an die Regeleinrichtung 20 angeschlossen ist. Diese weist einen Stellbefehlgeber 62 auf, der über eine Steuerleitung 17 mit dem Antrieb 10 der Mehrwege-Mischeinrichtung 7 verbunden ist.

In Fig. 3 ist dargestellt, daß die beim Ausführungsbeispiel gemäß Fig. 2 in Form eines Vier-Wege-Mischers 7 ausgebildete Mehrwege-Mischeinrichtung auch als Drei-Wege-Mischer 8 ausgeführt sein kann, wenn die Rohrleitungsführung für das Wärmeträgermedium entsprechend getroffen ist. Ohne daß in Fig. 3 der Wärmeerzeuger dargestellt wäre, was nichts anderes besagen soll, als daß dieser in beliebiger Weise ausgebildet sein kann, beispielsweise nach Art des Wärmeerzeugers gemäß Fig. 1 oder nach Art des Wärmeerzeugers gemäß Fig. 2, die vorstehend bereits beschrieben sind, ist der Wärmeträgermedium-Ausgang 76 desselben an den einen Strömungseingang des Drei-Wege-Mischers 8 angeschlossen, während an seinen Strömungsausgang der Heizungsvorlauf 14 angeschlossen ist, dessen weitere Leitungsführung die gleiche ist, wie im Zusammenhang mit dem Ausführungsbeispiel gemäß Fig. 2 bereits beschrieben. Der Heizungsrücklauf 16 ist an den Wärmeträgermedium-Eingang 77 des nicht dargestellten Wärmeerzeugers 2 angeschlossen, der seinerseits in bereits beschriebener Weise mit einem Ausdehnungsgefäß 61 für das Wärmeträgermedium in Verbindung steht. Strömungsaufwärts vom Ausdehnungsgefäß 61 ist der Heizungsrücklauf 16 über eine hier als Beimischleitung dienende Leitung 79 an den zweiten Eingang des Drei-Wege-Mischers 8 angeschlossen. In den Heizungsvorlauf 14 ist in bereits im Zusammenhang mit den Ausführungsbeispielen gemäß Fig. 1 und 2 beschriebener Weise eine Umwälzpumpe 6 eingeschaltet. Der Antrieb 10 der hier als Drei-Wege-Mischer 8 ausgebildeten Mehrwege-Mischeinrichtung ist über eine hier mit 18 bezeichnete Steuerleitung mit dem Stellbefehlgeber 62 der Regeleinrichtung 20 verbunden.

Die erfindungsgemäße Regelungseinrichtung 20 weist einzelne Aggregate bzw. Einrichtungen auf, deren impulsleitungsmäßige Verknüpfung vorstehend bereits erläutert worden ist und sich im übrigen aus den Ansprüchen und deren Erläuterung ergibt. Aus diesem Grunde werden die einzelnen Einrichtungen im folgenden lediglich hinsichtlich ihres Aufgabengebietes bzw. Einsatzzweckes beschrieben, da ihre Ausgestaltung dem Fachmann im einzelnen geläufig ist.

Der kontinuierlich gewonnene Meßwert oder die in vorgegebenen Zeitabständen nacheinander gewonnen Meßwerte der Temperatur des Rauch- bzw. Abgases werden von der Meßeinrichtung 126 aufgenommen und über die Meßwertleitung 127 einem Rechner R der Einrichtung 20 zugeführt. Dieser bildet aus den Werten der Rauch- bzw. Abgastemperatur die erste, zweite oder n-te mathematische Ableitung nach der Zeit. Dies kann bei der ersten Ableitung z.B. dadurch geschehen, daß der in äquidistanten Zeitmaßen erfaßte Wert durch selbige Zeitmaße dividiert wird. Für die zweite Ableitung wird dieser neue Wert wiederum durch dasselbe Zeitmaß dividiert usw. usf. Dieser gebildete Wert wird je nach der vorgesehenen Konzeption ihrer Weiterverarbeitung entweder einer Vergleichseinrichtung 27 zur Bestimmung der Größe und/oder Richtung der Abweichung der zeitlichen Ableitung der Rauch- bzw. Abgastemperatur von einer Grenze ihres Sollwert-Bandes der zeitlichen Ableitung oder aber einer Meßwertspeichereinrichtung 26 zugeführt. Das Vergleichsnormal für die Vergleichseinrichtung 27 wird in Form eines der oberen Grenze eines Sollwert-Bandes der zeitlichen Ableitung entsprechenden Impulses von einem einstellbaren Sollwertgeber 41 und in Form eines der unteren Grenze dieses Sollwert-Bandes entsprechenden Impulses von einem weiteren einstellbaren Sollwertgeber 42 geliefert.

Statt einer ersten, zweiten oder n-ten Ableitung nach der Zeit können auch mehrere zeitliche Ableitungen gleichzeitig gebildet und zur Regelung herangezogen werden. In diesem Fall kann für jede zeitliche Ableitung eine Einrichtung $E_1$ bis $E_n$ vorgesehen werden. Statt der Rauch- bzw. Abgastemperatur kann auch je nach Anwendungsfall die Vorlauf- oder Rücklauf- oder die Wärme- bzw. Kältequellentemperatur des Kälte- bzw. Wärmeerzeugers 2 verwendet werden und daraus zeitliche Ableitungen gebildet werden. Dies bedeutet, daß in der nachfolgenden Beschreibung aus Vereinfachungsgründen unter der Messung der Temperatur am Ort der Wärme- bzw. Kältequelle stets eine dieser vier Temperaturen gemeint ist, obwohl nur z.B. die Rauch- bzw. Abgastemperatur genannt wird.

Hierbei umfaßt der Begriff des Regelns (im späteren meist auch temperieren genannt) sowohl das Heizen als auch das Kühlen von Räumen 3, welche ihrerseits Aufenthaltsräume für Menschen oder Tiere oder aber auch Lagerräume für empfindliche Güter oder Maschinen bzw. Apparaturen, wie beispielsweise Computer oder dergleichen, oder aber auch Räume 3 sein können, in denen bestimmte Behandlungen an toter Materie oder aber auch an Lebewesen, wie beispielsweise Bakterien- oder Virenkulturen oder dergleichen, vorgenommen werden sollen, die in solchen Fällen üblicherweise als Zuchträume bezeichnet werden. Entsprechend werden solche Räume 3 entweder durch mit einer Wärmequelle (im späteren meist auch Wärmeerzeuger 2 genannt) verbundene Heizeinrichtung (im späteren meist auch Heizkörper 3a, 3b genannt) oder aber durch mit einer Kältequelle (im späteren meist auch Kälteerzeuger) verbundene Kühleinrichtungen geregelt (bzw. im späteren meist auch temperieren genannt), wobei diese Heizeinrichtungen (Heizkörper 3a, 3b) oder Kühleinrichtungen jeweils mit Stelleinrichtungen (im späteren meist auch automatisch wirkende Drosseleinrichtungen 4a, 4b genannt) ausgerüstet sind.

Für das gebildete Signal(e) werden in der Speichereinrichtung $E_1$ bis $E_n$ oder 26 ein Sollwert-Band mit verstellbarer unterer(en) und oberer(en) Grenze(n) 41 und 42 bzw. $E_1^u$ bis $E_n^u$ und $E_1^o$ bis $E_n^o$ angelegt und alle zeitlichen Änderungen außerhalb des Sollwert-Bandes zur Beeinflussung der Leistung des Kälte- bzw. Wärmeerzeugers 2 herangezogen. Das Signal der zeitlichen Ableitung(en) $E_1$ bis $E_n$ ist hierbei gegenüber den an sich bekannten Signalen aus den üblichen Temperaturen wesentlich eindeutiger und größer. Das Entscheidende ist jedoch, daß nicht die Werte der Vor- bzw. Rücklauf- oder Wärme- bzw. Kältequellentemperatur oder Rauch- bzw. Abgastemperatur die Information über den Leistungsbedarf des jeweiligen Hauses angeben bzw. in sich tragen, sondern die zeitlichen Ableitungen der vorgenannten Größen in den Speichereinrichtungen $E_1$ bis $E_n$, d.h. ihr Verlauf über der Zeit die Information des Leistungsbedarfes beinhalten, und dies unabhängig davon, ob der Leistungsbedarf hoch oder niedrig bzw. ob die Anlage im Sommer oder im Winter gefahren wird. Dadurch kann der Schaltpunkt des Ein- bzw. des Ausschaltens des Brenners 9 der Heizeinrichtung 1 bzw. der Wärmequelle 2 je nach Wunsch auf den anlagespezifischen maximalen Wert der zeitlichen Ableitung in $E_1^o$ bis $E_n^o$ oder auf den Einschwingbereich der Annäherung gegen Null gewählt werden, d.h., wählt man eine sehr kleine zeitliche Ableitung in $E_1^u$ bis $E_n^u$, dann erhält man einen besonders großen Bereich, in dem die Wärme- oder Kältequelle ausgeschaltet ist. Dies ist besonders vorteilhaft für den Absenkbetrieb (Nachtabsenkung), und durch Variation dieser Betriebsparameter lassen sich alle Betriebsarten von Komfortbetrieb bis Frostschutz feinstufig realisieren.

Die Regeleinrichtung 20 eliminiert somit eine Abweichung der Werte $E_1$ bis $E_n$ über die obere Grenze $E_1^o$ bis

$E_n^o$ des jeweilig vorgegebenen Sollwert-Bandes hinaus durch Verringerung der in den Kühl- bzw. Heizeinrichtungsvorlauf (im nachfolgenden Wärmeträgermedium-Vorlaufleitung 14 genannt) eingespeisten Wärme- bzw. Kälteleistung entsprechend dem Maß der Abweichung und einer Abweichung der Werte $E_1$ bis $E_n$ unter die untere Grenze $E_1^u$ bis $E_n^u$ des jeweilig vorgegebenen Sollwert-Bandes durch Vergrößerung der in den Kühl- bzw. Heizeinrichtungsvorlauf 14 eingespeisten Wärme- bzw. Kälteleistung entsprechend dem Maß dieser Abweichung.

Ferner ist dargestellt, daß die Regeleinrichtung 20 eine Einrichtung X1 beinhaltet, in der die zeitlichen Ableitungen unabhängig von ihrem Vorzeichen stets als positiver Betrag gespeichert sind und eine Einrichtung X2, in der ebenfalls die zeitlichen Ableitungen stets als positiver Betrag gespeichert sind. Jeweils bei Überschreiten eines Wertes $E_1$ bis $E_n$ gegenüber einem in Einrichtung X1 wird die Zufuhr von Betriebsenergie zum Wärme- oder Kälteerzeuger eingestellt oder reduziert, und bei Unterschreiten eines Wertes $E_1$ bis $E_n$ gegenüber einem in Einrichtung X2 wird die Zufuhr von Betriebsnergie zum Wärme- oder Kälteerzeuger über die Steuerleitung 19 wieder aufgenommen oder erhöht.

Wahlweise kann auch eine Einrichtung X3 verwendet werden, in der die zeitlichen Änderungen nur als positive Zahlen oder Null gespeichert sind und bei Überschreiten eines Wertes in $E_1$ bis $E_n$ gegenüber dem in Einrichtung X3 über ein Signal 19 der Wärmeerzeuger oder Kälteerzeuger ausgeschaltet wird. Ferner ist eine Einrichtung X4 vorhanden, in der nur Beträge von negativen Zahlen oder Null gespeichert werden und beim Unterschreiten eines Wertes in $E_1$ bis $E_n$ gegenüber dem in Einrichtung X4 der Wärme- oder Kälteerzeuger über die Leitung 19 eingeschaltet wird. Dies gilt nur für Heizbetrieb. Für Kühlbetrieb kann sinnvollerweise eine Einrichtung X5 vorgesehen werden, in der obere Grenzen nur als negative Zahlen oder Null gespeichert werden, positive Zahlen werden nicht berücksichtigt, und eine Einrichtung X6, in der die untere Grenze stets nur eine positive Zahl ist, negative Zahlen werden nicht berücksichtigt. Bei Überschreiten eines Wertes in $E_1$ bis $E_n$ gegenüber X5 wird der Kälteerzeuger ausgeschaltet bzw. seine Leistung verringert, und bei Unterschreiten eines Wertes in $E_1$ bis $E_n$ gegenüber X6 wird der Kälteerzeuger eingeschaltet bzw. seine Leistung erhöht.

Es kann auch sehr vorteilhaft sein, insbesondere die zweite zeitliche Ableitung der Temperatur am Ort des Wärmeerzeugers als eine positive Zahl oder Null in einer Einrichtung X7 als obere Grenze zu speichern und die zweite zeitliche Ableitung derselben als untere Grenze als positive Zahl in einer Einrichtung X8, und für Kühlbetrieb in einer Einrichtung X9 die obere Grenze als negative Zahl oder Null und in einer Einrichtung X10 die untere Grenze als Betrag einer negativen Zahl. Hier wird mit den Werten in Einrichtung $E_1$ bis $E_n$ analog verfahren wie bereits für die Fälle X1 bis X6 ausgeführt wurde. Ferner ist es zweckmäßig, zwei Zeitspeichereinrichtungen X11 und X12 für Beträge nach Überschreiten der einzelnen in den oberen Grenzen und Unterschreiten der in den unteren Grenzen gespeicherten Werte X1 bis X10 mit den Zeitspeichereinrichtungen X11 und X12 so zu kombinieren, daß selbst bei Überschreiten der Werte in X1, X3, X5, X7, X9 erst nach Ablauf der in X11 gespeicherten Zahl bzw. Zeit die Leistung des Wärme- bzw. Kälteerzeugers verringert wird, und daß selbst bei Unterschreiten der Werte in X2, X4, X6, X8, X10 erst nach Ablauf der in X12 gespeicherten Zahl bzw. Zeit die Leistung des Wärme- bzw. Kälteerzeugers erhöht wird.

Die in den Einrichtungen X13, X14; X13', X14'; X13'', X14''; X13''', X14''' gespeicherten Paare von oberen und unteren Grenzen zeitlichen Ableitung der Temperatur am Ort
des Wärmeerzeugers oder der zweiten zeitlichen Ableitung
oder höheren Ableitung können sowohl werksseitig vorgegeben
sein als auch seitens des Benutzers kontinuierlich
feinstufig ausgewählt und eingestellt werden. Ferner kann es
sinnvoll sein, diese Werte in Paaren so zu kombinieren, daß
die in den Einrichtungen 13, 13', 13'' oder 13''''
gespeicherten Werte und die in den Einrichtungen 14, 14',
14'' oder 14'''' gespeicherten Werte gleichsinnig abnehmen
oder gleichsinnig zunehmen.

Dargestellt sind ferner Zeitbildungseinrichtungen X17 und
X18, mittels derer das Zeitverhältnis der Ein- zur
Ausschaltung der Zufuhr von Betriebsenergie zum Wärme- bzw.
Kälteerzeuger über die Meßwertleitung 19 gesteuert wird.

Ferner dargestellt sind Einrichtungen X19 und X20, in denen
Zeiten gespeichert werden und eine Einrichtung X21, in der
der Quotient aus X19 und X20 über die Meßwertleitung 19 als
Stellbefehl dem Wärme- oder Kälteerzeuger zugeführt wird.
Die in X19 und X20 gespeicherten Zeitverhältnisse werden bei
Überschreiten der oberen Grenze in X21 zu kleineren
Quotienten und bei Unterschreiten in X21 zu größeren
Quotienten verändert.

Weiterhin kann die Sollwert-Wahleinrichtung 43, wie
dargestellt, eine Programmspeichereinrichtung 47a, 47b
aufweisen, die eine Verstelleinrichtung 48a für die
Sollwert-Bildungseinrichtung 46a für die obere Grenze des
Sollwert-Bandes der zeitlichen Ableitung(en) der Rauch- bzw.
Abgastemperatur und/oder eine Verstelleinrichtung 48b zur
Verstellung der Sollwert- Bildungseinrichtung 46b für die
untere Grenze dieses Sollwert-Bandes aufweist. Andererseits
kann aber auch eine Programmspeichereinrichtung 47a für die
obere Grenze des Sollwert-Bandes und eine eigene
Programmspeichereinrichtung 47b für die untere Grenze dieses Sollwert-Bandes vorgesehen sein. In beiden Ausführungsfällen ist durch zumindest eine der Verstelleinrichtungen 48a bzw. 48b entsprechend einer in der bzw. den Programmspeichereinrichtung(en) 47a, 47b bzw. 47a bzw. 47b gespeicherten Abhängigkeit das in der zugeordneten Sollwert-Bildungseinrichtung 46a, 46b bzw. 46a bzw. 46b gebildete Verhältnis in dem Sinne veränderbar, daß einem abnehmenden Wert der oberen oder unteren Grenze des Sollwert-Bandes der zeitlichen Ableitung(en) der Rauch- bzw. Abgastemperatur eine zunehmend geringere Differenz zwischen diesen beiden Grenzwerten und/oder ein zunehmend kleineres Verhältnis derselben entspricht.

Um auch extreme Wärmeverluste an irgendeiner Stelle des Gesamtwärmeverbrauchers 3 ermitteln und melden zu können, die so extreme Leistungsverluste bedingen, daß Abweichungen der zeitlichen Ableitung(en) über die obere Grenze ihres Sollwert-Bandes entweder überhaupt nicht oder zumindest doch während einer vorgegebenen Zeitspanne nicht auftreten, wie das beispielsweise bei offenstehendem Fenster in einer besonderen Kälteperiode der Fall sein kann, wodurch der betreffende Raum stark auskühlt und das System es nicht mehr schafft, daß die zeitliche Ableitung(en) die obere Grenze ihres Sollwert-Bandes überschreiten kann, kann zweckmäßig weiterhin eine Meldeeinrichtung 60 zur Abgabe einer optisch und/oder akustisch wahrnehmbaren Information, die über eine Impulsleitung an eine Auslöseeinrichtung 40 angeschlossen ist, die ihrerseits mit der Vergleichseinrichtung 27 der Regeleinrichtung 20 zur Bestimmung der Abweichung der zeitlichen Ableitung(en) über die obere und/oder unter die untere Grenze ihres Sollwert-Bandes und/oder mit einer Meßwertspeichereinrichtung 26 verbunden ist, und eine Zeitsteuereinrichtung 51 zur Durchführung einer Mehrzahl von Messungen der zeitlichen Ableitung(en) durch die Meßeinrichtung 126 und R oder eine Zeitsteuereinrichtung 52 zur Aufnahme und/oder zum Abruf eines Meßwertes oder einer Mehrzahl von von der Meßeinrichtung 126 und R gelieferten Meßwerten der zeitlichen Ableitung(en) durch die Meßwertspeichereinrichtung 26 bzw. von dieser jeweils innerhalb einer vorgegebenen Zeitspanne vorgesehen sein, wobei diese Meldeeinrichtung(en) 60 durch die Auslöseeinrichtung 40 immer dann aktivierbar ist bzw. sind, wenn zumindest nach einer vorgegebenen Zeitspanne keine Abweichung der zeitlichen Ableitung(en) über die obere Grenze ihres Sollwert-Bandes zu verzeichnen ist.

Es kann aber auch ein Betriebszustand auftreten, bei dem zeitliche Ableitung(en) ständig oder jedenfalls während einer vorgegebenen Zeitspanne nicht über die untere Grenze der zeitlichen Ableitung(en) hinauskommt(en). Dies deutet dann bei Ausführung des Wärmeerzeugers 2 als brennstoffbefeuerter Heizkessel auf einen Defekt des Brenners 9 desselben und bei Ausführung des Wärmeerzeugers 2 als brennstoffbefeuerte Sorptionswärmepumpe auf einen Defekt des Brenners des Kochers derselben sowie bei Ausführung des Wärmeerzeugers 2 als verbrennungsmotorisch betriebene Kompressionswärmepumpe auf einen Defekt des Kompressoraggregates entweder auf seiner Kompressorseite oder auf seiten seines Antriebsmotors hin. Um auch einen solchen allgemein als "Brennerdefekt" zu bezeichnenden Störfall detektieren zu können, kann die Auslöseeinrichtung 40 so ausgebildet sein, daß durch sie die Meldeeinrichtung(en) 60 bei Auftreten einer Abweichung der zeitlichen Ableitung(en) nicht über die untere Grenze der zeitlichen Ableitung(en) überhaupt und/oder bei Auftreten dieses Zustandes innerhalb einer vorgegebenen Zeitspanne zur Wahrnehmbarmachung dieser durch diesen Zustand gebildeten Unregelmäßigkeit aktivierbar ist bzw. sind.

Es ist ersichtlich, daß bei der Ausführungsform der Erfindung gemäß Fig. 1 aufgrund von durch die Meßeinrichtung 126 und R für die zeitliche Ableitung(en) ermittelten Meßwerten derselben über die Regeleinrichtung 20 überwacht wird, ob diese Meßwerte die obere Grenze des über die einstellbaren Sollwertgeber 41 und 42 bzw. $E_1^u$ bis $E_n^u$ und $E_1^o$ bis $E_n^o$ eingestellten Sollwert-Bandes der zeitlichen Ableitung(en) überschreiten oder aber die untere Grenze dieses Sollwert- Bandes unterschreiten. In beiden Fällen wird durch die Regeleinrichtung 20 die betreffende Abweichung der zeitlichen Ableitung(en) von der betreffenden Grenze ihres Sollwert-Bandes ausgeregelt, indem über den Stellbefehlgeber 62 die in den Heizungsvorlauf 14 eingespeiste Wärmeleistung bei Ausscheren der zeitlichen Änderung der Rauch- bzw. Abgastemperatur aus ihrem Sollwert-Band über die eine oder die andere Grenze desselben heraus so beeinflußt wird, daß die zeitliche Ableitung(en) wieder in den Bereich zwischen den beiden Grenzen ihres Sollwert-Bandes zurückgeführt wird. Insoweit untrscheidet sich die Erfindung wesentlich vom Stand der Technik, als bei ihr nämlich einerseits in neuartiger Weise eine bisher nicht für zur Regelung brauchbare Meßwerte ergebend erachtete physikalische Größe, nämlich die zeitliche Ableitung(en) einer der am Ort der Wärme- oder Kältequelle wahlweise herangezogenen Vorlauf- oder Rücklauf- oder Abgas- oder eine Wärme- bzw. Kältequellentemperatur und insbesondere alle Kombinationen daraus als Führungsgröße für die Regelung herangezogen wird und andererseits nicht etwa eine physikalische Größe auf Konstanz geregelt wird, sondern eine Abweichung dieser physikalischen Größe, im speziellen der zeitlichen Ableitung(en), über eine obere vorgegebene Grenze eines Sollwert-Bandes hinweg oder unter eine untere Grenze desselben auf ihren Verschwindwert ausgeregelt wird, während beliebige Abweichungen von beiden Grenzen des Sollwert-Bandes dieser physikalischen Größe, hier der zeitlichen Ableitung(en), von der Regelung toleriert werden, sofern sich diese wertmäßig nur innerhalb dieses vorgegebenen Sollwert-Bandes bewegt(en), wobei auch Schwankungen dieser physikalischen Größe (der zeitlichen Ableitung(en)) beliebiger Größe erfindungsgemäß ohne Einfluß auf die Regelung bleiben, sofern sie nicht zu einem Überschreiten der oberen Grenze des vorgegebenen Sollwert-Bandes oder einem Unterschreiten der unteren Grenze desselben führen. Die Vorteile dieser Regelung nach der Erfindung sind eingangs bereits detailliert erläutert worden.

Die Art, wie diese Ausregelung solcher durch Überschreiten der oberen Grenze des Sollwert-Bandes oder Unterschreiten der unteren Grenze desselben bedingten Abweichungen bewerkstelligt wird, hängt von der Art der Heizungsvorrichtung 1 im allgemeinen und der Ausgestaltung der Zuspeisung der Wärmeleistung zum Heizungsvorlauf 14 im besonderen ab. Bei der Ausführungsform der Erfindung gemäß Fig. 1 ist, wie vorstehend bereits erläutert, ein Regelungszugriff vom Stellbefehlgeber 62 der Regeleinrichtung 20 her auf eine nicht näher dargestellte und auch nicht bezeichnete Einrichtung zur Beeinflussung der Zufuhr von Betriebsenergie zum mit fossilem Brennstoff betriebenen Wärmeerzeuger 2 als Stellglied vorgesehen. Dieses kann als kontinuierlich verstellbare oder aber im Ein-Aus-Betrieb arbeitende Einrichtung beliebiger bekannter Art ausgebildet sein. In jedem Fall erfolgt bei der Ausführungsform der Erfindung gemäß Fig. 1 die Beeinflussung der dem Heizungsvorlauf 14 zugeführten Wärmeleistung über Einwirkung auf die Zufuhr von Betriebsenergie zum Antriebsmotor des Kompressors des als Kompressionswärmepumpe oder zum Kocher des als Sorptionswärmepumpe ausgebildeten Wärmeerzeugers 2. Ist dieser für kontinuierliche Zuführung von Betriebsenergie während der Betriebsdauer ausgelegt, so erfolgt die Einwirkung auf die dem Heizungsvorlauf 14 zugeführte Wärmeleistung durch Verringerung der Zufuhr der Betriebsenergie zum Wärmeerzeuger 2 dann, wenn die Regeleinrichtung 20 ein Überschreiten der oberen Grenze des Sollwert-Bandes der zeitlichen Ableitung(en) ermittelt hat, und durch Vergrößerung der Zufuhr von Betriebsenergie zum Wärmeerzeuger 2 dann, wenn ein Unterschreiten der unteren Grenze des Sollwert-Bandes der zeitlichen Ableitung(en) vorliegt. Handelt es sich hingegen um einen Wärmeerzeuger 2 mit diskontinuierlicher Zuführung seiner Betriebsenergie, dann erfolgt erfindungsgemäß die Einflußnahme auf diese so, daß immer dann, wenn ein Überschreiten der oberen Grenze des Sollwert-Bandes der zeitlichen Ableitung(en) vorliegt, die Zufuhr von Betriebsenergie zum Wärmeerzeuger 2 unterbrochen bzw. abgeschaltet und dann, wenn die Regeleinrichtung 20 ein Unterschreiten der unteren Grenze des Sollwert-Bandes der zeitlichen Ableitung(en) ermittelt, die Zufuhr von Betriebsenergie zum Wärmeerzeuger 2 aufgenommen wird.

Eine andere Betriebsart sieht vor, daß für eine Wärme- oder Kältequelle 2 mit diskontinuierlicher Zufuhr seiner Betriebsenergie bei Überschreiten der oberen Grenze des Sollwert-Bandes das Zeitverhältnis der Ein- zur Ausschaltung der Zufuhr von Betriebsenergie zum Wärme- bzw. Kälteerzeuger erhöht wird und bei Unterschreiten der unteren Grenze selbiges Zeitverhältnis verringert wird. Bei dieser Betriebsart wird also nicht bei Üerschreiten des Sollwert-Bandes jeweils die Betriebsenergie-Zufuhr veranlaßt oder unterbunden, sondern anstelle dessen das Zeitverhältnis der Ein- zur Ausschaltung der Zufuhr von Betriebsenergie zum Wärme- bzw. Kälteerzeuger bei Bandüber- oder Unterschreitung verändert.

Die Ausführungsform der Erfindung gemäß Fig. 2 und ebenso auch eine dieser dann, wenn in dieser der strichpunktierte umrandete Bereich III durch die Rohrleitungs-, Mehrwegemischeinrichtungs- und Umwälzpumpen-Anordnung gemäß Fig. 3 ersetzt wird, entsprechende Ausführungsform unterscheiden sich von der gemäß Fig. 1, abgesehen von der lediglich beispielhaft dargestellten Anwendung in Verbindung mit einer Zweistrang-Anlage, nur darin, daß die Einflußnahme auf die Zuführung der Wärmeleistung zum Heizungsvorlauf 14 hier nicht durch irgendwie geartete Änderung der Zufuhr der Betriebsenergie zum Wärmeerzeuger 2 erfolgt, sondern durch Zugriff auf die hier jeweils vorgesehene Mehrwege-Mischeinrichtung in Form des Vier-Wege-Mischers 7 gemäß Fig. 2 oder des Drei-Wege-Mischers 8 gemäß Fig. 3.

Es ist ersichtlich, daß eine Ausführung eines Wärmeerzeugers 2 als brennerbefeuerter Heizkessel auch in Fig. 1 zur Anwendung kommen kann, ebenso wie gleichermaßen eine Ausführung eines Wärmeerzeugers 2, wie diese in Verbindung mit Fig. 1 beschrieben ist, bei der Vorrichtung 1 gemäß Fig. 2 Verwendung finden kann. Gleichermaßen sind auch die Ausführungen gemäß Fig. 2 und Fig. 3 in Verbindung mit Einstrang-Anlagen gemäß Fig. 1 im Rahmen der Erfindung mit allen Vorteilen derselben verwendbar. Die dargestellten Ausführungen sollen nur beispielhaft Möglichkeiten aufzeigen, die wichtigsten Varianten der Erfindung zu verwirklichen, ohne dabei erschöpfend alle Möglichkeiten von Kombinationen von Wärmeerzeuger-Ausführungen, Arten der Veränderung der dem Heizungsvorlauf 14 zuzuspeisenden Wärmeleistung und/oder Ausführungen der Regeleinrichtung, insbesondere bezüglich deren Vervollkommnung im Hinblick auf die Vielzahl der nach der Erfindung möglichen Selbstlernvorgänge bildlich darzustellen. Aus dem gleichen Grunde ist auch auf die Darstellung der impulsleitungsmäßigen Verknüpfung der einzelnen Aggregate bzw. Einrichtungen der Regeleinrichtung 20 verzichtet worden, weil diese bereits einleitend und in den betreffenden Ansprüchen detailliert erläutert sind und im Bedarfsfall der Fachmann andersartige impulsleitungsmäßige Verknüpfungen in Kenntnis der beschriebenen Verknüpfungen ohne erfinderisches Zutun einfach ermitteln kann.

COHAUSZ & FLORACK
PATENTANWALTSBÜRO
SCHUMANNSTR. 97 D-4000 DÜSSELDORF 1
Telefon: (02 11) 68 33 46          Telex: 08 58 65 13 cop d

PATENTANWÄLTE:
Dipl.-Ing. W COHAUSZ · Dipl.-Ing. R KNAUF · Dipl.-Ing. H. B COHAUSZ · Dipl.-Ing. D. H. WERNER

**0192228**

17.02.1986
HC/Be 46057EP

– 31 –

Ansprüche

1. Verfahren zur Regelung der Temperatur in Räumen, die Heiz- und/oder Kühleinrichtungen mit Stelleinrichtungen aufweisen, mittels derer ihre Leistung und damit die Raumtemperatur geregelt werden kann, wobei die Heiz- und/oder Kühleinrichtungen von einer zentralen Wärme- oder Kältequelle gespeist werden, d a d u r c h g e k e n n z e i c h n e t , daß mindestens eine Temperatur am Ort der Wärme- bzw. Kältequelle erfaßt wird, hieraus die erste und/oder höhere Ableitungen nach der Zeit gebildet werden, für die Werte der zeitlichen Ableitungen ein Sollwert-Band mit unterer und oberer Grenze derselben angelegt wird, und daß alle zeitlichen Ableitungen außerhalb des Sollwert-Bandes durch Veränderung der Leistung der Wärme- bzw. Kältequelle eliminiert werden.

2. Verfahren nach Anspruch 1, d a d u r c h g e k e n n z e i c h n e t , daß der Ort der Wärme- bzw. Kältequelle die Vorlauf- oder Rücklauf- oder Rauch- bzw. Abgastemperatur bzw. eine Wärme- oder Kältequellentemperatur ist.

3. Verfahren nach einem der vorherigen Ansprüche, d a d u r c h g e k e n n z e i c h n e t , daß eine Abweichung der Werte über die obere Grenze des jeweilig vorgegebenen Sollwert-Bandes hinaus durch Verringerung der in den Heiz- bzw. Kühleinrichtungsvorlauf eingespeisten Wärme- bzw. Kälteleistung entsprechend dem Maß dieser Abweichung und eine Abweichung der Werte unter die untere Grenze des jeweilig vorgegebenen Sollwert-Bandes durch Vergrößerung der in den Heiz- bzw. Kühleinrichtungsvorlauf eingespeisten Wärme- bzw. Kälteleistung entsprechend dem Maß dieser Abweichung eliminiert wird.

4. Verfahren nach einem der vorherigen Ansprüche, d a d u r c h   g e k e n n z e i c h n e t , daß für die zeitliche Ableitung(en) der Temperatur der Wärme- bzw. Kältequelle für Heiz- und Kühlbetrieb die obere Grenze der Betrag einer positiven Zahl ist und die untere Grenze der Betrag einer kleineren positiven Zahl als der der oberen Grenze ist.

5. Verfahren nach Anspruch 1 oder 2, d a d u r c h   g e k e n n z e i c h n e t , daß für die zeitliche Ableitung der Temperatur für Heizbetrieb die obere Grenze des Sollwert-Bandes der Betrag einer positiven Zahl oder Null ist und die untere Grenze des Sollwert-Bandes der Betrag einer negativen Zahl ist, und daß für Kühlbetrieb die obere Grenze des Sollwert-Bandes der Betrag einer negativen Zahl oder Null ist und die untere Grenze des Sollwert-Bandes eine positive Zahl ist.

6. Verfahren nach Anspruch 1 oder 2, d a d u r c h   g e k e n n z e i c h n e t , daß für die zweite zeitliche Ableitung der Temperatur für Heizbetrieb die obere Grenze des Sollwert-Bandes eine positive Zahl oder Null ist und die untere Grenze des Sollwert-Bandes eine positive Zahl ist, und daß für Kühlbetrieb die obere Grenze des Sollwert-Bandes der Betrag einer negativen Zahl oder Null ist und die untere Grenze des Sollwert-Bandes der Betrag einer negativen Zahl ist.

7. Verfahren nach Anspruch 5, d a d u r c h   g e k e n n z e i c h n e t , daß eine Abweichung der Werte über die obere Grenze des vorgegebenen Sollwert-Bandes über eine vorgegebene Zeit hinaus durch Verringerung und eine Abweichung der Werte unter die untere Grenze des vorgegebenen Sollwert-Bandes über eine vorgegebene Zeit hinaus durch Vergrößerung der in den Heiz- bzw. Kühleinrichtungsvorlauf eingespeisten Wärme- bzw. Kälteleistung eliminiert wird.

8. Verfahren nach einem der vorherigen Ansprüche, d a d u r c h   g e k e n n z e i c h n e t , daß eine Reihe von oberen und unteren Grenzen des jeweiligen Sollwert-Bandes werksseitig zur wahlfreien Einstellung zur Verfügung stehen, die benutzerseitig feinstufig auswählbar sind, wobei abnehmenden Werten der oberen Grenzen gleichsinnig abnehmende Werte der unteren Grenzen zugeordnet sind.

9. Verfahren nach einem der vorherigen Ansprüche, d a d u r c h   g e k e n n z e i c h n e t , daß die obere und die untere Grenze sowie beide Grenzen des jeweiligen Sollwert-Bandes benutzerseitig in zulässigen Grenzen wahlfrei veränderbar sind.

10. Verfahren nach einem der vorherigen Ansprüche, d a d u r c h   g e k e n n z e i c h n e t , daß das Ändern der eingespeisten Wärme- bzw. Kälteleistung durch Ein- und Ausschalten der Zufuhr der Betriebsenergie zum Wärme- bzw. Kälteerzeuger erfolgt.

11. Verfahren nach Anspruch 10, d a d u r c h   g e k e n n z e i c h n e t , daß bei Auftreten einer Abweichung der Werte über eine der beiden Grenzen ihres vorgegebenen Sollwert-Bandes hinaus das Zeitverhältnis der Ein-Schaltung zur Aus-Schaltung der Zufuhr von Betriebsenergie zum Wärme- bzw. Kälteerzeuger entsprechend dem Maß der Abweichung der Werte verändert wird.

12. Verfahren nach einem der vorherigen Ansprüche, d a d u r c h g e k e n n z e i c h n e t , daß das Ändern der eingespeisten Wärme- bzw. Kälteleistung durch kontinuierliche Veränderung der Zufuhr der Betriebsenergie zum Wärme- bzw. Kälteerzeuger erfolgt.

13. Verfahren nach einem der vorherigen Ansprüche, d a d u r c h g e k e n n z e i c h n e t , daß die Veränderung der dem im Heiz- bzw. Kühleinrichtungsvorlauf befindlichen Wärmeträgermedium zugeführten Wärme- bzw. Kälteleistung mittels einer Mehrwege-Mischeinrichtung erfolgt und bei Auftreten einer Abweichung der Werte über die obere oder unter die untere Grenze ihres vorgegebenen Sollwert-Bandes die Zufuhr von Wärme- bzw. Kälteleistung zum im Heiz- bzw. Kühleinrichtungsvorlauf befindlichen Wärmeträgermedium durch Veränderung des Verhältnisses des vom Wärme- bzw. Kälteerzeuger her in den Heiz- bzw. Kühleinrichtungsvorlauf eingespeisten Massenstroms zum Gesamtmassenstrom und/oder der Stellung des dieses Verhältnis bestimmenden Organs der Mehrwege-Mischeinrichtung verändert wird.

14. Verfahren nach einem der vorherigen Ansprüche, d a d u r c h g e k e n n z e i c h n e t , daß bei Fehlen einer Abweichung und/oder Fehlen einer Abweichung innerhalb einer vorgegebenen Zeitspanne der Werte über die obere und/oder unter die untere Grenze ihres jeweilig vorgegebenen Sollwert-Bandes diese Unregelmäßigkeit optisch und/oder akustisch wahrnehmbar gemacht wird.

FIG. 1

FIG.2

FIG.3